# FASCICULE DE BREVET EUROPEEN

(11) **EP 1 044 747 B1**
(45) Date de publication et mention de la délivrance du brevet: **02.10.2002**
(21) Numéro de dépôt: 00400875.1
(22) Date de dépôt: 30.03.2000
(51) Int. Cl.: B23B 31/18

(54) **Mandrin de serrage à six bras sur rotules, palonnés deux à deux**
Futter mit sechs Armen auf Kugelgelenken, zwei für jeden Schwenkhebel
Chuck with six arms on ball joint, yoked two by two

(30) Priorité: 15.04.1999 FR 9904716
(43) Date de publication de la demande: 18.10.2000
(73) Titulaire: SANDVIK TOBLER S.A., F-95380 Louvres (FR)
(72) Inventeur: Barbieux, Jacques, 95308 Louvres (FR)
(74) Mandataire: Lhuillier, René

(56) Documents cités:
- FR-A- 2 248 901
- US-A- 3 082 015
- US-A- 3 365 206

## Description

L'invention se situe dans le domaine technique des mandrins de serrage à mors, tels que décrits dans le préambule de la revendication 1. Un tel mandrin est connu du document US-A-3 082 015.

On connait un certain nombre de dispositifs de serrage de pièces, par exemple des mandrins à serrage radial et axial, mais sans serrage compensé, ou encore des mandrins à un ou plusieurs mors concentriques ou compensés en diamètre, à serrage radial avec ou sans serrage axial, à répartition modifiable entre le serrage radial et le serrage axial avec compensation desdits serrage et répartition de l'effort de serrage à peu près égale sur chaque mors, comme décrit dans le FR-A 2373 351.

Plus récemment on a apporté des modifications à ces systèmes en réalisant un mandrin de serrage permettant un guidage radial précis des porte-mors dans le corps du mandrin, qui assure aussi une liberté de pivotement axial de ceux-ci en vue d'un positionnement optimal des mors au contact de la pièce à serrer. Pour cela chaque porte-mors est équipé d'un élément guidé le long d'une rainure ménagée au sein du mandrin, ledit élément de guidage étant uniquement libre de pivoter axialement par rapport au porte-mors, comme décrit dans le FR 2 720 670.

Les systèmes à trois mors le plus couramment utilisés, n'empêchent cependant pas la déformation des pièces dans des conditions d'usinage à grande vitesse, c'est pourquoi il est apparu intéressant de multiplier les points de contact du mandrin sur la pièce afin de mieux en épouser le profil et éviter les risques de déformation. Dans ce but le Demandeur a retenu une solution mettant en oeuvre six mors de serrage régulièrement répartis sur le mandrin, en prévoyant six bras montés sur rotules et palonnés deux à deux.

L'invention a donc pour objet principal un mandrin de serrage à mors comportant plusieurs bras porte-mors pivotants dans le corps du mandrin sous l'action d'une tige de traction se déplaçant axialement et comportant un mécanisme transformant ce déplacement axial en un déplacement radial des éléments de serrage de la pièce assurés par les bras pivotants et une liaison à bille tronquée et pan incliné, selon lequel ledit mandrin de serrage comporte au moins six bras porte-mors qui sont manoeuvrés deux à deux par un même palonnier, chaque palonnier étant articulé sur une tirette de commande centrée sur l'axe du mandrin et coulissant axialement dans son corps principal sous l'action de la tige de traction, le palonnier dispose de deux ouvertures rectangulaires orientées selon le rayon du mandrin dont les bordures du côté intérieur forment la rampe sur laquelle est en appui la face plane de la bille tronquée liée au bras porte-mors correspondant. Les revendications dépendantes décrivent des réalisations avantageuses de l'invention.

Plus précisement, le palonnier est articulé sur la tirette de commande par un axe traversant un trou central dudit palonnier.

Selon une autre caractéristique particulière de l'invention, la tirette de commande est pourvue d'au moins trois paires d'ailes, les ailes s'étendant de part et d'autre de la partie centrale du palonnier.

D'autres caractéristiques particulières et avantages de l'invention ressortiront de la description qui va suivre d'un exemple non limitatif de réalisation dans lequel on fait référence aux dessins annexés qui représentent :
- Figure 1,: une demi-coupe transversale du mandrin,
- Figure 2,: une vue en coupe selon II-II de la figure 1,
- Figure 3,: une vue de face du palonnier,
- Figure 4,: une vue en coupe selon IV-IV de la figure 3,
- Figure 5,: une vue de face de la tirette,
- Figure 6,: une vue en coupe selon VI-VI de la figure 1.

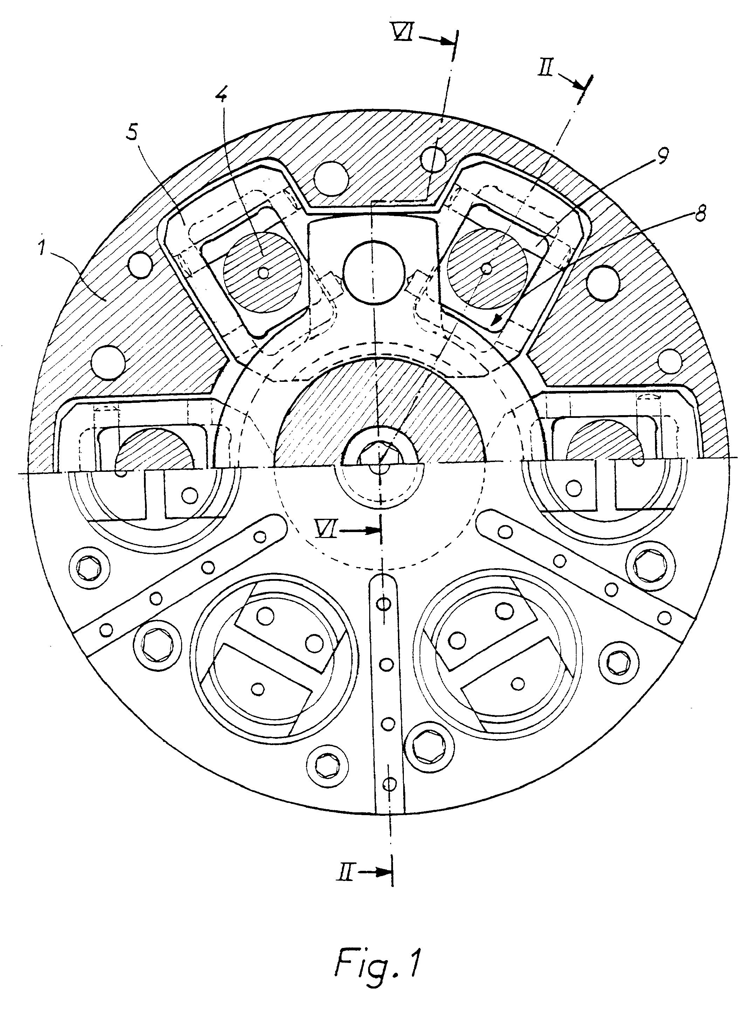

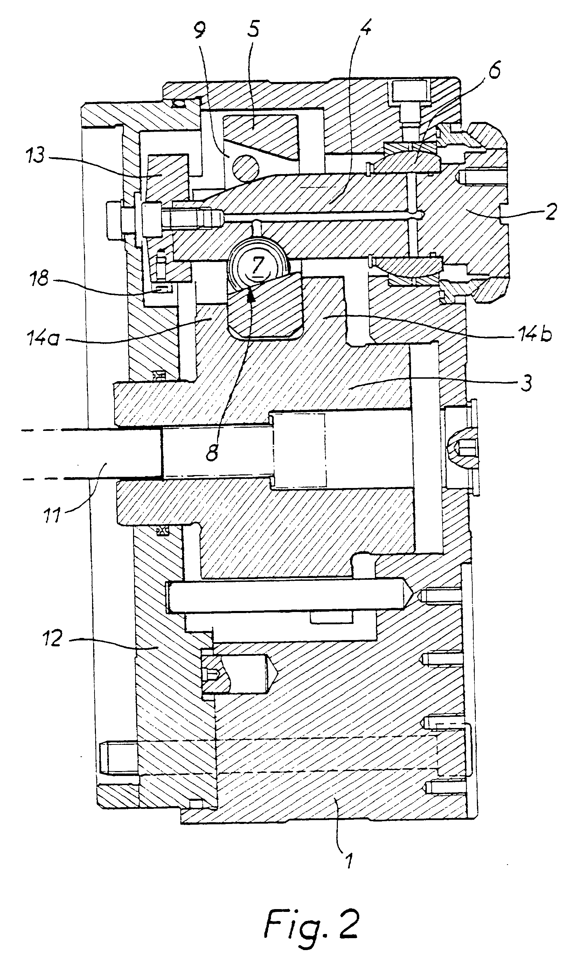

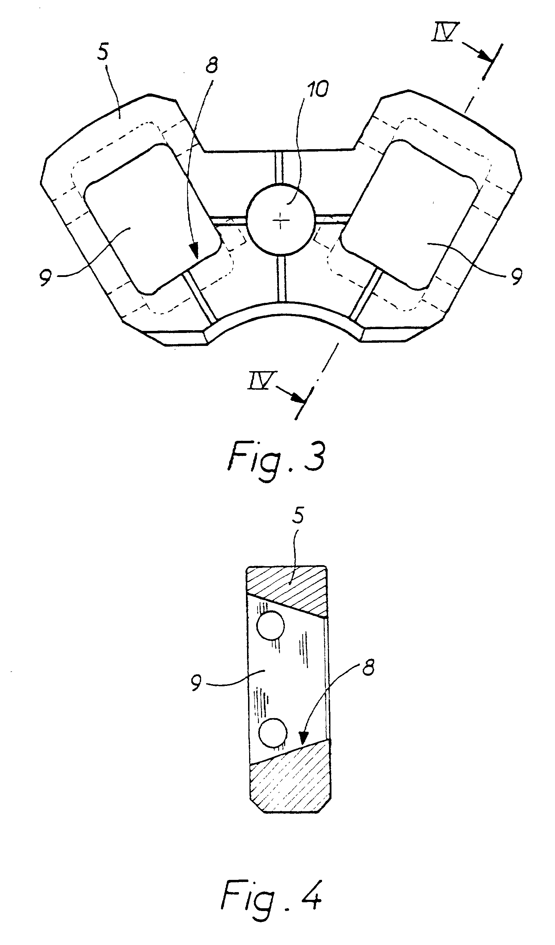

Le mandrin de serrage représenté aux figures 1 et 2 est équipé de six mors 2 régulièrement répartis sur le pourtour du corps principal 1 du mandrin. Chaque mors est monté en haut d'un bras porte-mors 4 apte à pivoter à l'intérieur du corps principal grâce à une rotule 6. La partie inférieure du bras est profilée pour épouser le contour d'une bille tronquée 7 dont la face plane est en appui sur une rampe 8 formée par le bord d'une ouverture 9 ménagée à l'intérieur d'un palonnier 5 mieux visible aux figures 3 et 4. Chaque palonnier 5 est une pièce en arc de cercle perçée en son centre d'un trou cylindrique 10 et de part et d'autre de celui-ci de deux ouvertures rectangulaires 9 orientées selon le rayon du mandrin, dont les bordures du côté intérieur forment la rampe 8. Chaque palonnier reçoit donc dans les ouvertures deux bras porte-mors 4 qui se trouvent ainsi "palonnés" deux à deux.

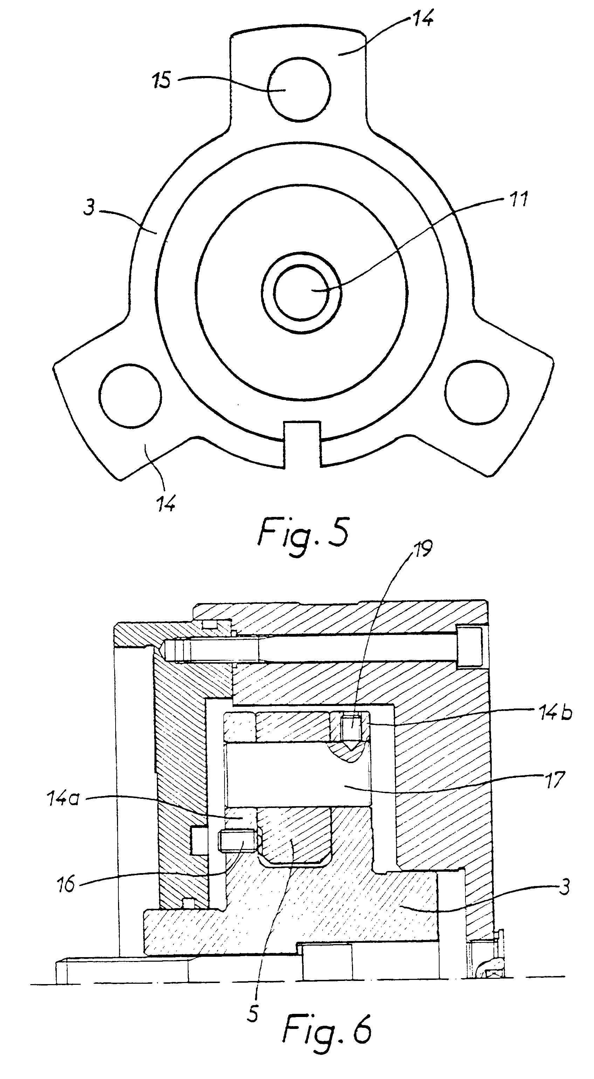

Trois palonniers 5 sont donc répartis sur le corps principal du mandrin. Ils sont articulés grâce à un axe 17 coopérant avec le trou 10, sur une tirette de commande 3 visible à la figure 2, de même qu'aux figures 5 et 6. La tirette 3 centrée sur l'axe du mandrin, est soumise à une tige de traction 11 et elle coulisse axialement dans un plateau 12 fixé à l'arrière du corps principal 1. La tirette est pourvue de trois paires d'ailes 14, les ailes 14a et 14b s'étendant de part et d'autre de la partie centrale d'un palonnier 5. Les ailes 14 sont perçées d'une ouverture 15 correspondant à l'ouverture 10 du palonnier et traversées par son axe 17.

On voit aux figures 2 et 6 que le palonnier 5 est ainsi pincé entre les ailes (14a, 14b) de la tirette 3 et on comprend qu'un mouvement axial de la tirette se transmet au palonnier et par conséquent aux deux bras porte-mors 4 qui en dépendent. Chacun des trois palonniers assure ainsi l'ouverture et la fermeture compensées de deux bras 4. Chacun des bras 4 est apte à pivoter à l'intérieur du corps principal grâce aux rotules 6, par le fait que la bille 7, soumise au déplacement de la rampe 8 correspondante entraine le basculement du bras.

Chaque bras 4 supporte à son extrémité arrière (partie gauche de la figure 2) une masselotte 13 destinée à compenser l'effet centrifuge des mors. Une butée 18 de fin de course des bras est prévue au niveau de la masselotte, pour le repositionnement angulaire des porte-mors en desserrage, et pour assurer un passage maximum de la pièce en chargement.

Du fait que les trois palonniers 5 sont "embarqués" et solidaires de la tirette 3 dans son mouvement axial, on a un bon guidage et une bonne rigidité des porte-mors.

En se référant plus précisément à la figure 6, on remarque qu'un poussoir à ressort 16 est monté sur une des ailes 14a de la tirette 3 et vient en appui sur le palonnier 5. Il permet de maintenir celui-ci en position intermédiaire moyenne, pendant l'approche des mors sur la pièce. Par ailleurs une vis pointeau 19 sur l'autre aile 14b assure le maintien de l'axe 17.

## Revendications

1. Mandrin de serrage à mors comportant plusieurs bras porte-mors (4) pivotants dans le corps du mandrin sous l'action d'une tige de traction (11) se déplaçant axialement et comportant un mécanisme transformant ce déplacement axial en un déplacement radial des éléments de serrage de la pièce assuré par les bras pivotants (4), le mandrin de serrage comportant au moins six bras porte-mors (4) qui sont manoeuvrés deux à deux par un même palonnier (5), chaque palonnier (5) étant articulé sur une tirette de commande (3) centrée sur l'axe du mandrin et coulissant axialement dans son corps principal sous l'action de la tige de traction (11) **caractérisé en ce que** le mécanisme comprend une liaison à bille tronquée et pan incliné, et **en ce que** le palonnier (5) dispose de deux ouvertures rectangulaires (9) orientées selon le rayon du mandrin dont les bordures du côté intérieur forment la rampe (8) sur laquelle est en appui la face plane de la bille tronquée (7) liée au bras porte-mors correspondant (4).

2. Mandrin de serrage selon la revendication 1 **caractérisé en ce que** le palonnier (5) est articulé sur la tirette de commande (3) par un axe (17) traversant un trou central (10) dudit palonnier.

3. Mandrin de serrage selon la revendication 1 **caractérisé en ce que** la tirette de commande (3) est pourvue d'au moins trois paires d'ailes (14), les ailes (14a et 14b) s'étendant de part et d'autre de la partie centrale du palonnier 5.

4. Mandrin de serrage selon la revendication 3 **caractérisé en ce que** un poussoir à ressort (16) est monté sur une des ailes (14a) de la tirette de commande (3) et vient en appui sur le palonnier (5).

5. Mandrin de serrage selon les revendications 2 et 3 **caractérisé en ce que** une vis pointeau (19) montée sur une aile (14b) de la tirette de commande (3) assure le maintien de l'axe (17).

6. Mandrin de serrage selon la revendication 1 supportant à son extrémité arrière une masselotte pour compenser l'effet centrifuge des mors, **caractérisé en ce que** une butée (18) de fin de course des bras est prévue au niveau de la masselotte (13), pour le repositionnement angulaire des porte-mors (4) en desserrage.

## Patentansprüche

1. Spannfutter mit Backen, mehrere Backen-Tragarme (4) umfassend, schwenkbar in dem Gehäuse des Spannfutters unter der Wirkung einer Zugstange (11), die axial verschiebbar ist, und einen Mechanismus umfassend, der diese Axialbewegung in eine Radialbewegung der Elemente zum Spannen des Werkstücks umwandelt, gewährieistet durch die schwenkbaren Arme (4), wobei das Spannfutter wenigstens sechs Backen-Tragarme (4) umfasst, von denen jeweils zwei als Paar durch einen Schwenkhebel (5) betätigt werden und jeder Schwenkhebef (5) gelenkig mit einem Betätigungs-Zugelement (3) verbunden ist, das auf die Achse des Spannfutters zentriert ist und unter der Wirkung der Zugstange (11) axial in seinem Hauptgehäuse gleitet,
**dadurch gekennzeichnet,**
**dass** der genannte Mechanismus eine Verbindung mit einer Kugel (7) umfasst, die eine schräge ebene Fläche aufweist, und dadurch, dass der Schwenkhebel (5) zwei rechteckige Öffnungen (9) umfasst, die entsprechend dem Radius des Spannfutters ausgerichtet sind und deren innere Ränder die Rampe (8) bilden, auf der die genannte schräge ebene Fläche der Kugel (7) sich abstützt, die mit dem entsprechenden Backen-Tragarm (4) verbunden ist.

2. Spannfutter nach Anspruch 1, **dadurch gekennzeichnet, dass** der Schwenkhebel (5) mit dem Zugelement (3) durch eine Achse (17) gelenkig verbunden ist, die eine zentrale Bohrung (10) des genannten Schwenkhebels durchquert.

3. Spannfutter nach Anspruch 1, **dadurch gekennzeichnet, dass** das Zugelement (3) wenigstens drei Flügelpaare 14 umfasst, wobei die Flügel (14a und 14b) sich beiderseits des zentralen Teils des Schwenkhebels 5 erstrecken.

4. Spannfutter nach Anspruch 3, **dadurch gekennzeichnet, dass** eine Federdruckeinrichtung (16) in einen der Flügel (14a) des Zugelements (3) montiert ist und sich auf dem Schwenkhebel (5) abstützt.

5. Spannfutter nach den Ansprüchen 2 und 3, **dadurch gekennzeichnet, dass** eine in einen Flügel (14b) des Zugelements (3) montierte Klemmschraube (19) den Hart der Achse (17) gewährleistet.

6. Spannfutter nach Anspruch 1, das an seinem hinteren Ende ein Ausgleichs- bzw. Fliehgewicht trägt, um die zentrifugale Wirkung der Backen zu kompensieren, **dadurch gekennzeichnet, dass** in Höhe des Ausgleichs- bzw. Fliehgewichts ein Endstellungsanschlag (18) der Arme vorgesehen ist, um in der Ausspannstellung die Backenträger (4) winkelmäßig zu repositionieren.

## Claims

1. Clamping chuck with jaws comprising a plurality of jaw-carrying arms (4) that pivot in the body of the chuck under the action of a pull rod (11) that moves axially and comprises a mechanism that converts that axial displacement into a radial displacement of the workpiece-clamping elements operated by the pivoting arms (4), the clamping chuck comprising at least six jaw-carrying arms (4), which are operated in respective pairs by a shared control bar (5), each control bar (5) being articulated on an actuation pulling device (3) centred on the axis of the chuck and sliding axially in its main body under the action of the pull rod (11), **characterised in that** the mechanism comprises a linkage comprising a truncated ball and an inclined face, and **in that** the control bar (5) includes two rectangular openings (9) oriented according to the radius of the chuck, the edges of which openings on the inner side form the ramp (8) against which there rests the plane face of the truncated ball (7) associated with the corresponding jaw-carrying arm (4).

2. Clamping chuck according to claim 1, **characterised in that** the control rod (5) is articulated on the actuation pulling device (3) by a shaft (17) that passes through a central hole (10) of said control rod.

3. Clamping chuck according to claim 1, **characterised in that** the actuation pulling device (3) is provided with at least three pairs of wings (14), the wings (14a and 14b) extending on each side of the central portion of the control rod 5.

4. Clamping chuck according to claim 3, **characterised in that** a spring-activated pushing device (16) is mounted on one of the wings (14a) of the actuation pulling device (3) and comes into contact with the control rod (5).

5. Clamping chuck according to claims 2 and 3, **characterised in that** a set screw (19) mounted on one wing (14b) of the actuation pulling device (3) holds the shaft (17) in place.

6. Clamping chuck according to claim 1, bearing a fly-weight, at its rear end, for cancelling the centrifugal action of the jaws, **characterized in that** an end-of-course abutment (18) of the arms is arranged on the fly-weight (13) for the angular repositioning of the jaw-carrying arms (4) upon unclampering.
